# EUROPEAN PATENT SPECIFICATION

(11) **EP 1 908 676 B1**
(45) Date of publication and mention of the grant of the patent: **20.07.2016**
(21) Application number: 07019543.3
(22) Date of filing: 05.10.2007
(51) Int. Cl.: B62J 17/04

(54) **Windshield apparatus for saddle-type vehicle**
Windschutzvorrichtung für ein Motorrad
Appareil d'essuie-glace pour véhicule à selle

(30) Priority: 06.10.2006 JP 2006275693
(43) Date of publication of application: 09.04.2008
(73) Proprietor: Honda Motor Co., Ltd., Minato-ku Tokyo 107-8556 (JP)
(72) Inventor: Kawai, Kenji, Saitama - ken (JP); Ikezaki, Masahiko, Saitama - ken (JP)
(74) Representative: Weickmann & Weickmann PartmbB

(56) References cited:
- EP-A1- 1 642 811
- GB-A- 241 692
- GB-A- 2 263 259
- US-A- 5 997 070
- US-B1- 6 343 827
- US-B1- 6 736 441

## Description

The present invention relates to a windshield apparatus for a saddle-type vehicle, specifically relates to one that is provided on a frontal portion of the saddle-type vehicle.

Conventionally, windshield apparatuses of this type have been used as a windscreen to improve a user's comfortableness at the time of traveling, and provided in a frontal portion of a motorcycle, together with a head lamp, a meter panel and the like. The conventional windshield apparatuses provided in the frontal portion of a motorcycle are supported by stays arranged on a rear side of the windscreen, thus making the stays less conspicuous at the front side, aiming at improvement in appearance.

In EP 1 642 811 A1 on which the preamble of claim 1 is based, the supporting portion 16 is mounted on the rear side of the windshield 34 facing the rider.

In GB 2 263 259 A, figure 1 schematically shows the dashed outline of a windscreen in front view only.

In US 6,736,441 B1, figure 2, the stays 48 support the windscreen 36 from the rear side thereof.

In US 6,343,827 B1, figure 6, the stays IC support the windscreen RSW from the rear side thereof.

GB 241 692 A describes a windshield apparatus according to the preamble of claim 1.

For example, JP 3756257 B2 discloses a stay comprising: a pair of side plates each being attached to a front forked portion through a fixture; an upper plate extending transversely in the width direction of the vehicle, said upper plate bridging the upper ends of both side plates; and a bottom plate that connects the lower ends of both side plates.

According to the prior art, a garnish is screwed to the front surface of each plate, while the windscreen is sandwiched between each plate and the garnish to thereby fix the windscreen to a front wheel suspension system. Herein, the garnishes provided on the front surface of the windscreen are to collect and rectify air that hits the windscreen at the time of travel.

According to the above-mentioned prior art, however, the stay is arranged on a rear side of the windscreen, and thus there have been problems that the stay is liable to take a complex shape, and that a rear space of the windscreen, i.e., a space for placing a meter panel and the like is too narrow.

In view of the above problem, it is, therefore, an object of the present invention to provide a windshield apparatus for a saddle-type vehicle which can be attached thereto without narrowing a space at a rear side of a windscreen.

In order to achieve above object, the invention according to a first aspect proposes a windshield apparatus for attachment to a frontal portion of a saddle-type vehicle in accordance with claim 1.

The invention according to a second aspect of the invention is characterized in that an elastic member is provided between said supporting portion and said windscreen.

The invention according to a third aspect of the invention is characterized in that a clearance is formed between said supporting portion and said windscreen.

The invention according to a fourth aspect of the invention is characterized in that said fixing portion is constituted of a member extending rearwardly from a lower end of said supporting portion.

According to the windshield apparatus of the first aspect, it is possible to ensure a wider space at a rear side of the windscreen, thus enabling a user to feel liberating, and

the supporting portion is made less likely to come into the sight of a user, thus enabling a user to feel liberating, while improving comfortableness at the time of traveling.

According to the windshield apparatus of the second aspect, it is possible to control noises due to the stay contacting the windshield through the elastic member, even in the case of a vehicle having a comparatively highly vibratory V-type engine.

According to the windshield apparatus of the third aspect, it is possible to allow part of airflow received by the windscreen to escape in a width direction smoothly, while enabling the rear surface of the stay to be easily cleaned due to a comparatively wide clearance being ensured therein.

According to the windshield apparatus of the fourth aspect, it is possible to make the fixing portion for fixing the stay to the saddle-type vehicle less conspicuous, thus enabling the improvement in appearance.
Fig. 1 is a perspective view showing an overall structure of a windshield apparatus of the present invention.
Fig. 2 is a perspective view showing a support structure of a windscreen of the windshield apparatus of the present invention, in which (a) shows a view seen from front, while (b) a view seen from rear.
Fig. 3 is a perspective view showing a structure of a bar handle according to the windshield apparatus of the present invention.
Fig. 4 is a partially cross-sectional plan view showing the windscreen held by stays according to the windshield apparatus of the present invention.
Fig. 5 is a partially exploded front view showing a positional relationship between the windscreen and a bar handle according to the present invention.
Fig. 6 is a partially cutaway side view showing the windshield apparatus of the present invention attached to the vehicle.
Fig. 7 is a front view showing a handle cover of the windshield apparatus of the present invention.
Fig. 8 is a rear view showing the handle cover thereof.
Fig. 9 is an explanatory perspective view showing a step of attaching the windshield apparatus of the invention.
Fig. 10 is another explanatory perspective view showing a step of attaching the windshield apparatus of the invention.
Fig. 11 is another explanatory perspective view showing a step of attaching the windshield apparatus of the invention.
Fig. 12 is another explanatory perspective view showing a step of attaching the windshield apparatus of the invention.
Fig. 13 is another explanatory perspective view showing a step of attaching the windshield apparatus of the invention.
Fig. 14 is another explanatory perspective view showing a step of attaching the windshield apparatus of the invention.

Next is a description of preferred embodiments of the present invention with reference to the attached drawings.

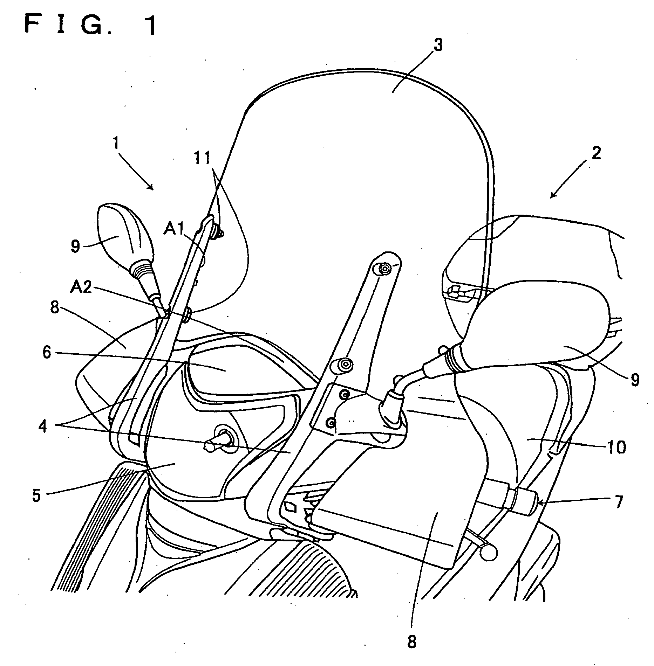

A windshield apparatus of a saddle-type vehicle shown in Fig. 1 (hereinafter called "windshield apparatus 1") includes a windscreen 3 provided in a frontal portion of the saddle-type vehicle 2 (hereinafter simply called "vehicle 2") and stays 4 for fixedly attaching the windscreen 3 thereto, such that more airflow may be allowed to pass over a user's head at the time of traveling, enabling the improving of user's comfortableness.

In the frontal portion of the vehicle 2, there are provided a head lamp 5, a handle cover 6 equipped with a meter panel (not shown), a bar handle 7 protruding from the handle cover 6, knuckle guards 8 which cover a front of both ends of the bar handle 7 and rearview mirrors 9 fixed to said bar handle 7. Said windscreen 3 is arranged above said handle cover 6.

In the frontal portion of the above-structured vehicle 2, the windscreen 3 is supported from the front side by a pair of the stays 4 arranged in front of the handle cover 6 in a width direction, i.e., at right and left sides thereof with the head lamp 5 provided therebetween. A space at a seat 10 side of the frontal portion is prevented from getting narrowed, by arranging the stays 4 in front of the handle cover 6 so as to support the windscreen 3 from the front side thereof, thus enabling a user to feel liberating. In the meantime, the stays 4 are attached with a clearance being formed between the handle covers 6 and the stays 4.

The windscreen 3, which is composed of a transparent tabular material formed from a resin material, is formed in a saddle shape, having left-right symmetry. A clearance A1 is formed between the windscreen 3 and each stay 4 by fixing the former to the latter through a grommet 11.

Accordingly, the air which hits the windscreen 3 can pass through the clearance A1. Moreover, the windscreen 3 is arranged so that another clearance A2 may be formed between the upper surface of the handle cover 6 and the windscreen 3. In the meantime, an elastic body may be employed for the grommet 11, which may be, for example, a rubber damper composed of a rubber material having elasticity.

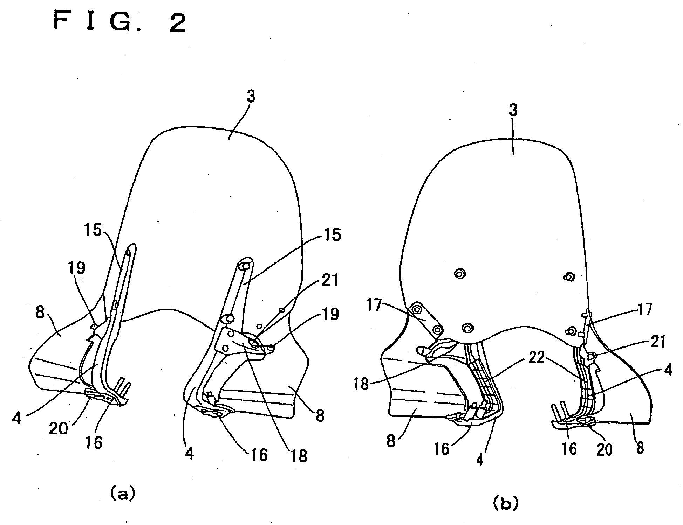

As shown in Fig. 2, each stay 4 is composed of an L-shaped member comprising first and second pieces formed from a resin material, said first piece extending in substantially the vertical direction while said second piece extending in substantially the horizontal direction. A supporting portion 15 for supporting said windscreen 3 from the front side thereof is provided at the first piece side of each stay 4. The supporting portion 15 extends upwardly from the lower end of the windscreen 3 and is bolted to the windscreen 3.

Further, each stay 4 comprises a fixing portion 16 for fixing the windscreen 3 to the vehicle 2, said fixing portion 16 being provided at the second piece side that extends rearwardly of the first piece side. The fixing portion 16 is composed of a member extending rearwardly from the lower end of the supporting portion 15, and is fixed to the bar handle 7 via a bolt. The supporting portion 15 and the fixing portion 16 are connected with each other through a curved connection, where the former is formed integrally with the latter.

Since each stay 4 is formed from a resin material, it is possible to freely choose a cross-sectional shape from among a circular one, non-circular one and etc. According to the present embodiment, it is preferable to choose a non-circular shape, such as a rectangular shape, in order to improve air-rectifying effect. Further, the front surface of each stay 4, i.e., the front side thereof when it is installed in the vehicle 2, may desirably be subjected to surface treatment so that it can impart a sense of beauty. On the other hand, the rear surface of each stay 4, i.e., the rear side thereof when it is installed in the vehicle 2 is formed with a plurality of convex bars 22 extending both vertically and horizontally, thereby enabling the reinforcing of each stay 4.

Each knuckle guard 8 is provided separately from the windscreen 3 in a manner covering the hand of a user who grips the bar handle 7. The knuckle guard 8 is fixed to the neighborhood of the fixing portion 16 of each stay 4 while it is connected with the windscreen 3 at its upper end.

Each knuckle guard 8 is provided with: an abutting portion 17 having a hole formed therethrough for inserting a bolt B thereinto, said bolt B connecting the knuckle guard 8 with the windscreen 3 at the upper end; a connecting hole 19 for connection with a mirror attachment stay 18 formed below the abutting portion 17; and a fixing hole 20 for fixing the knuckle guard 8 to the stay 4 at a lower end.

Moreover, the mirror attachment stay 18 is provided with a support hole 21 in the center part thereof in order for a male screw of the side mirror 9 to be inserted therethrough. The mirror attachment stay 18 is suspended between the substantial center of the stay 4 and the knuckle guard 8, with both ends thereof being fixed thereto, respectively.

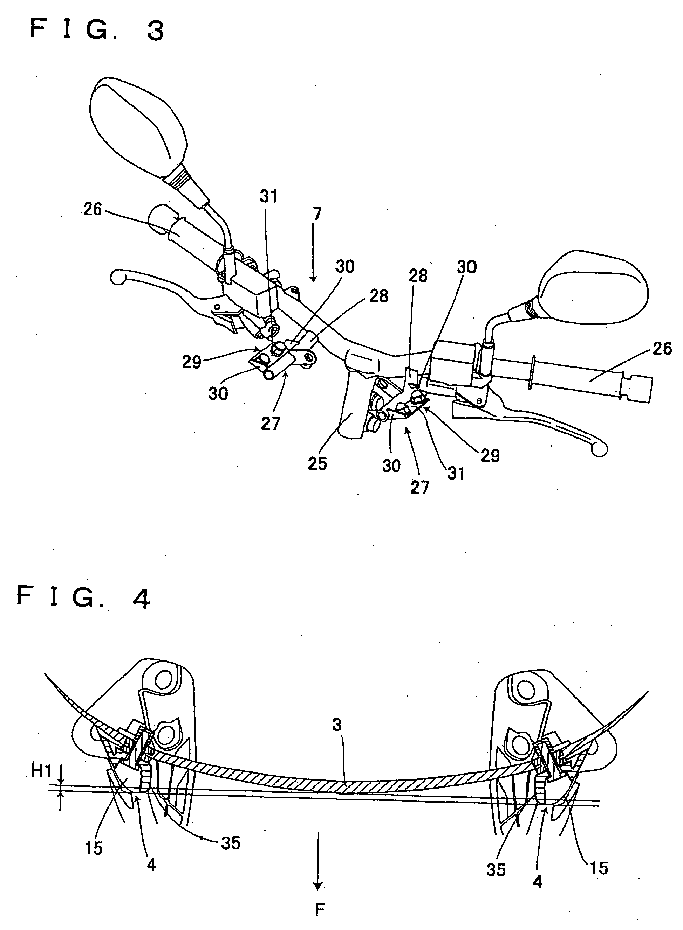

As shown in Fig. 3, the bar handle 7 is connected at its center thereof with an upper end of a shaft 25 that is axially supported by a head pipe provided integrally with the front end of the vehicle, while the bar handle 7 is provided with a grip 26 at both ends thereof. In the vicinity of a joint portion between the bar handle 7 and the shaft 25 are provided attaching portions 27 for fixedly attaching the fixing portion 16 formed on the second end of the stay 4. The attaching portions 27 are provided in pairs, arranged on right and left sides with the shaft 25 being disposed therebetween.

Each attaching portion 27 comprises a support rod 28 fixed to the bar handle 7 by welding; and a bracket 29 fixed to this support rod 28 by welding. The support rod 28 is formed in an L-shape, such that a second end thereof is fixed to the lower portion of the bar handle 7 so as to allow a first end thereof to protrude toward the front.

The bracket 29 is fixed to the outside surface of the support rod 28 fixed to the lower portion of the bar handle 7. The bracket 29 comprises: a frame part 30 with both ends erected vertically; and a flat part 31 surrounded by the frame part 30. The flat part 31 is formed with a hole (not shown) for inserting a bolt B therethrough to fix the second end of the stay 4, while a nut N for screwing the bolt B therethrough is fixed in advance in a manner closing the hole.

As shown in Fig. 4, the windscreen 3 has a curved shape that is convex toward the front F in a plan view. Each stay 4 comprises a rib 35 that is convex toward the front F in a plan view. The rib 3 5 is formed along substantially the full length of the supporting portion 15. The surface of the windscreen 3 is formed so that the protruding length thereof toward the front F is shorter than that of the rib 35 by H1 in the substantial center thereof with respect to the height direction.

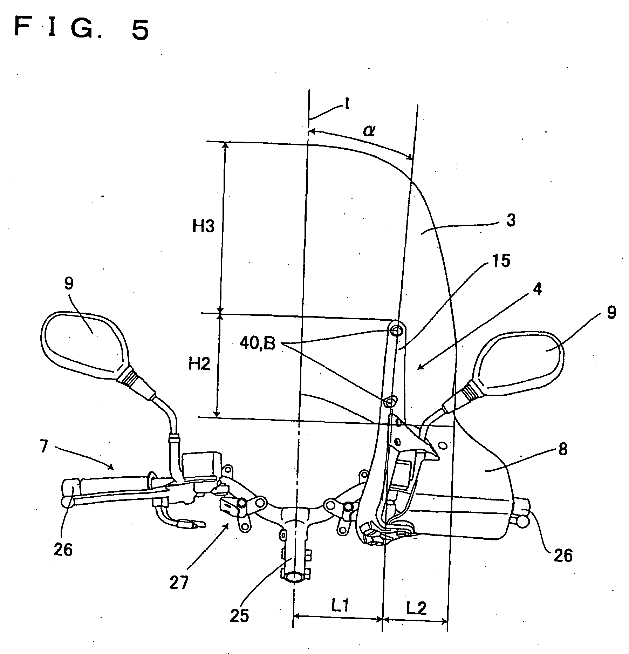

As shown in Fig. 5, the supporting portion 15 of each stay 4 is disposed midway between a center line I of the windscreen 3 and an outer edge thereof. Each stay 4 is fixed to the windscreen 3 by screwing the attachment bolt B into the bolt insertion hole 40 provided in the supporting portion 15. In a front view, the supporting portion 15 has an angle alpha to the vertical line I, and it is fixed so that it may incline toward an outside as it extends upwards in such a manner like a letter "V". As a result, each supporting portion 15 is arranged within a region from the outer edge of the windscreen 3 in the width direction up to one fourth of the width of the windscreen 3.

With the structure thus made, each stay 4 enables the bolt insertion hole 40 provided in the supporting portion 15 to be positioned within a region from the outer edge of the windscreen 3 in the width direction up to one fourth of the width of the windscreen 3. Accordingly, remarkable air rectification effect is obtained on the front side of the windscreen 3, thus allowing the airflow flowing toward the rear of the windscreen 3 to be pushed up, enabling the enhancement of the windshield effect to a user.

In the present embodiment, a length L1 from the center I of the windscreen 3 to the supporting portion 15 is longer than a length L2 from the supporting portion 15 to the outer edge of the windscreen 3.

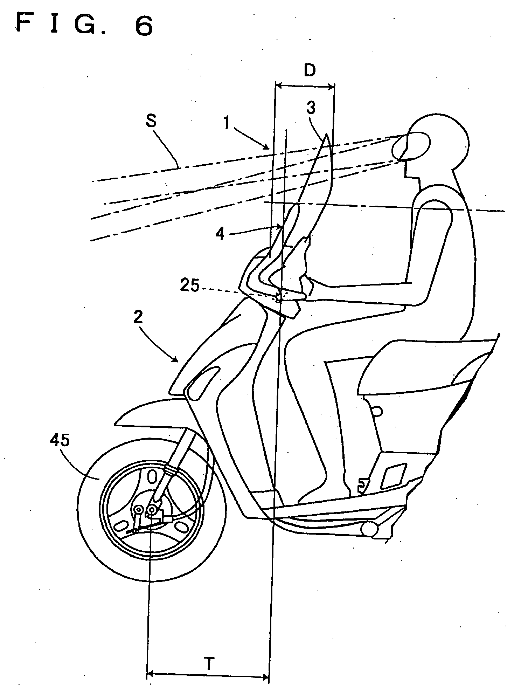

Moreover, each stay 4 is formed to such a length that the upper end of the supporting portion 15 may be positioned at a height less than or equal to half the height of the windscreen 3. In other words, each stay 4 is formed so that a length H2 from the lower end of the windscreen 3 to the upper end of the supporting portion 15 may be shorter than a length H3 from the upper end of the supporting portion 15 to the upper end of the windscreen 3. Accordingly, the stay 4 is made less likely to come into a user's sight S, as illustrated in Fig. 6, thus enabling a user to feel liberating. In this way, the windshield apparatus 1 of the invention makes it possible to allow an eye level of a user to be positioned above the upper end of the stay 4.

Moreover, the windscreen 3 is installed so that a width D thereof in a side view may partially overlap with a front fork width T defined by a distance between the center shaft of the front wheel 45 of the vehicle 2 and the shaft 25. In other words, the windscreen 3 is installed so that an upper end thereof may incline rearwards to protrude rearwardly of the shaft 25, while a lower end thereof may be placed within a zone defined by the front fork width T. By arranging the windscreen 3 in this way, the center of gravity of the windscreen 3 can be brought close to the rotation center of the bar handle 7, i.e., to the shaft 25.

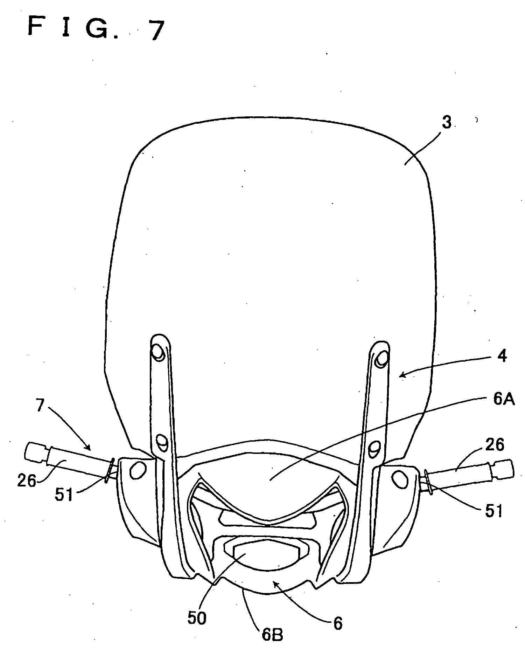

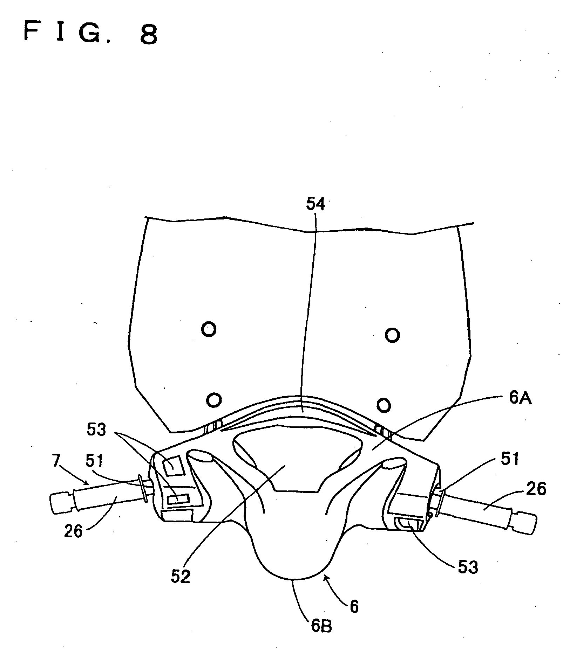

As shown in Fig. 7, the handle cover 6 is formed on a front side thereof with an opening 50 for head lamp, while it is formed on right and left sides thereof with an opening 51 for bar handle for protruding the grip 26 of the bar handle 7 therefrom. On the other hand, as shown in Fig. 8, the handle cover 6 is formed on a rear side thereof with an opening 52 for meter panel in the center thereof, and openings 53 for switch are provided around each opening 51 for bar handle. A visor 54 formed by raising a surface is provided in front of the opening 52 for meter panel.

The handle cover 6 comprises an inverted-U-shaped top cover 6A and a bottom cover 6B formed in a manner closing the lower opening of the top cover 6A, said top cover 6A and bottom cover 6B being formed integrally with each other by fitting one to the other by suitable coupling means, such as screw or claw. The handle cover 6 is fixed to the attaching portions 27 in the frontal portion of the vehicle 2 together with the stays 4, with the shaft 25 being positioned in the center. Thus, the attaching portions 27 fixing the stays 4 to the bar handle 7 are constituted so that they may be invisible from the outside due to the handle cover 6.

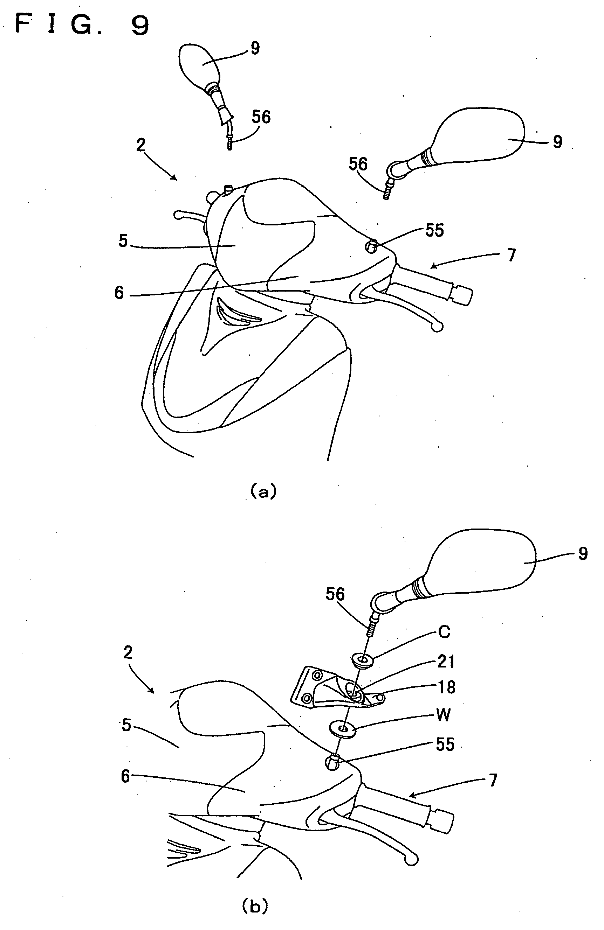

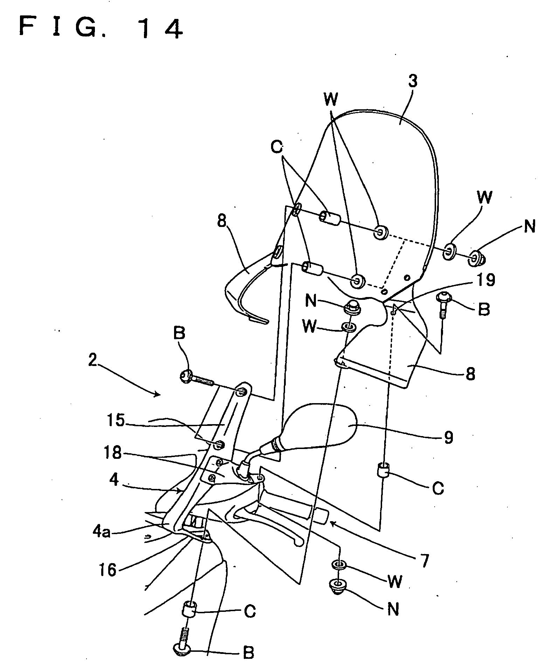

Next is a description of a method for attaching the above-structured windshield apparatus 1, with reference to Figs. 9 to 14. In the following description, only the right-side structure of the windshield apparatus 1 with respect to the traveling direction of the vehicle 2 will be illustrated and explained, while explanation of the right-side structure thereof will be omitted since it is substantially symmetrical one.

Initially, the side mirror 9 is attached to a frontal portion of the vehicle 2 having the head lamp 5, the handle cover 6, the bar handle 7 and the meter panel. The side mirror 9 is attached to the bar handle 7 by inserting a washer W, the mirror attachment stay 18 and a collar C in sequence into a female screw 55 vertically formed through the bar handle 7, and then screwing a male screw 56 formed in the side mirror 9 into the female screw 55.

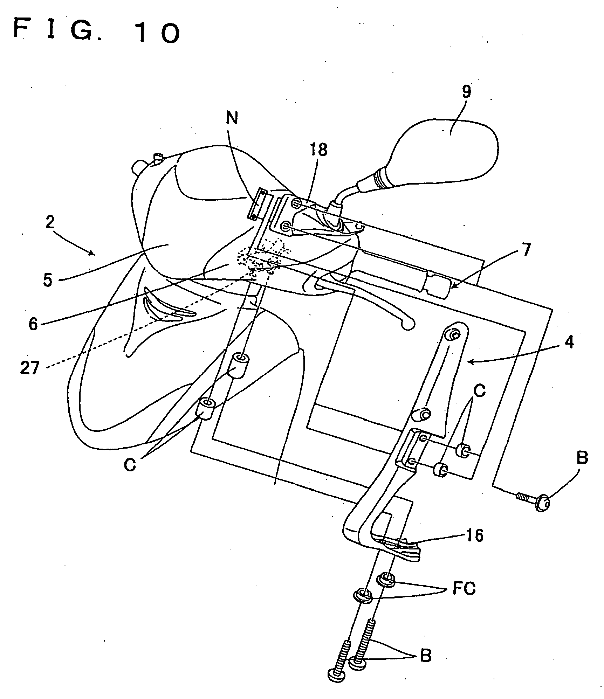

Next, the stay 4 is fixed to the bar handle 7 and the mirror attachment stay 18, as illustrated in Fig. 10. The stay 4 is fixed to the bar handle 7 together with the handle cover 6, by setting the collars C, the fixing portion 16 for the stay 4 and flange collars FC in sequence relative to the attaching portion 27 provided in the bar handle 7, and then inserting the bolts B from the flange collar FC side to be screwed into the nut N provided in the flange 31 of the attaching portion 27. At this moment, the stay 4 is attached to the handle cover 6 with a clearance being formed in a portion except the fixing portion 16.

On the other hand, to the mirror attachment stay 18 attached to the bar handle 7 together with the side mirror 9 is also fixed the stay 4 by placing the same inside the mirror attachment stay 18 with the collars C being disposed therebetween, and then inserting the bolts B from the mirror attachment stay 18 side to thereby screw the bolts B into the nuts N at the stay 4 side.

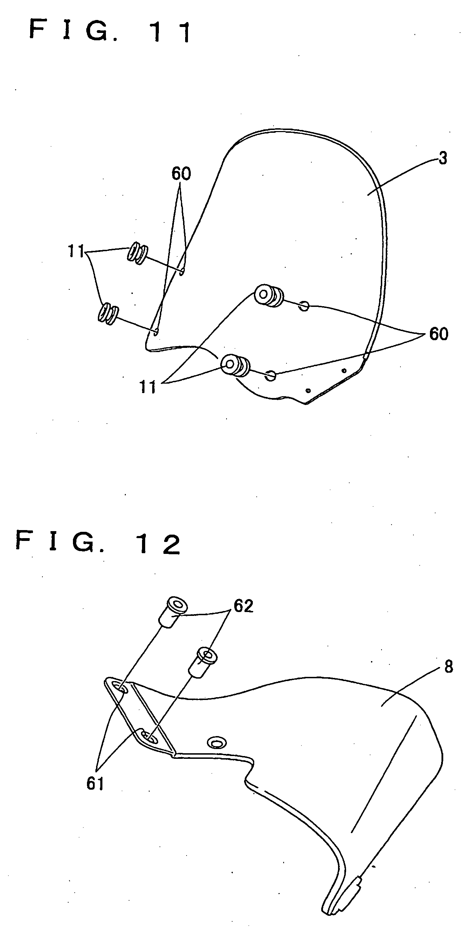

Hereinafter will be described how to attach the windscreen 3 with reference to Fig. 11 or later drawings. Initially, as shown in Fig. 11, grommets 11 are placed beforehand in bolt holes 60 provided in response to the bolt insertion holes 40 of the supporting section 15 of the stay 4.

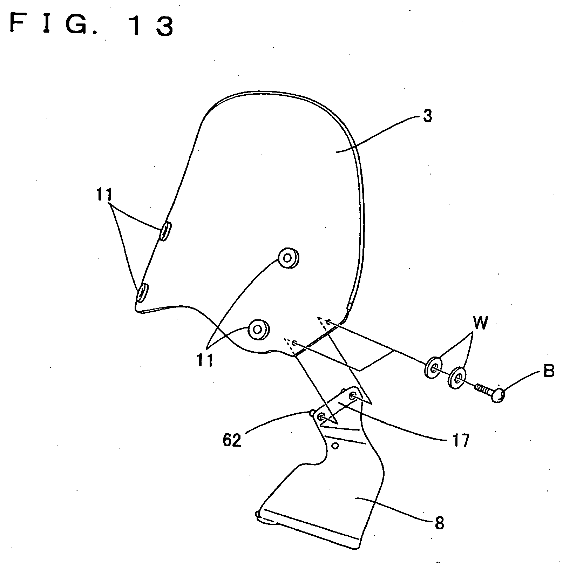

Subsequently, the knuckle guard 8 is attached to a bottom section on both sides of the windscreen 3. The knuckle guard 8 is attached as illustrated in Fig. 12, as follows: Connecting nuts 62 are each inserted into a hole 61 for nut formed in the abutting portion 17 provided on an upper end. Thereafter, as shown in Fig. 13, the abutting portion 17 of the knuckle guard 8 is brought into contact with the windscreen 3 from the rear side of the windscreen 3, while the bolts B are inserted through the washers W from the front side of the windscreen 3 to thereby be screwed into the connecting nuts 62 provided in the abutting portion 17 of the knuckle guard 8.

The windscreen 3 is attached to the frontal portion of the vehicle 2, with the knuckle guard 8 being attached in the above-mentioned manner. First, the windscreen 3 is placed on a rear side of the vehicle 2 relative to the supporting portion 15 of the stay 4 attached to the bar handle 7, and the bolts B are inserted from the supporting portion 15 side with the collars C and the washers W disposed between the supporting portion 15 and the windscreen 3, while at the rear side of the windscreen 3, the washers W are placed to pass the tip ends of the bolts B therethrough, which are then screwed into the nuts N, thus fastening the windscreen 3 thereto.

As for the knuckle guard 8, it is, at is bottom, overlapped from above with the fixing portion 16 of the stay 4, while the bolt B is inserted from below through the collar C, and the washer B is brought close to the tip end of the bolt B from the knuckle guard 8 side so that it allows the bolt B to be inserted through the washer B and then screwed into the nut, thus fastening the knuckle guard 8 to the stay 4.

Further, as for the knuckle guard 8, it is, at its connecting hole 19, overlapped from above with the mirror attachment stay 18 with the collar C disposed therebetween, while the bolt B is inserted from above into the connecting hole 19, and the washer B is brought close to the tip end of the bolt B from the mirror attachment stay 18 side so that it allows the bolt B to be inserted through the washer B and then screwed into the nut, thus fixing the knuckle guard 8 to the mirror attachment stay 18.

In this way, according to the windshield apparatus 1 of the present invention, it is possible to install the windscreen 3 above the handle cover 6. It should be noted herein that each stay 4 is so structured that it is easily deformable in the bent portion 4a serving as a connecting portion between the supporting portion 15 and the fixing portion 16 without forming any convex bars on a rear surface thereof. Accordingly, in the event that an excessive load is imposed on the stay 4, the bent portion 4a is subjected to bending deformation, thus absorbing the load.

Next is a description of the action of the above-structured windshield apparatus 1. According to the windshield apparatus 1 of the present embodiment, the windscreen 3 is arranged above the handle cover 6 equipped with the head lamp 3 and the meter panel so that the windscreen 3 is supported by the stays 4 from the front side.

Accordingly, the stays 4 are prevented from protruding toward the rear side of the windscreen 3, i.e., toward a user side sitting on the seat 10. As a result, the windshield apparatus 1 of the invention enables a space on a rear side of the windscreen 3 to be enlarged, thus enabling a user to feel liberating.

Further, since the windscreen 3 is free from the stays 4 protruding toward the rear side thereof, the rear side of the windscreen 3 is liberated, enabling the reducing of the interference with appliances disposed between the bar handle 7 and the windscreen 3, thus increasing degree of freedom in relation to the attachment position, while making it possible to ensure a wider space to temporarily put something therein during the stop of the vehicle.

Each stay 4 is so structured that the windscreen 3 may be supported by the supporting portion 15 through the grommets 11 serving as elastic members, thus forming the clearance A1 between the supporting portion 15 and the windscreen 3. Accordingly, the windshield apparatus 1 of the invention enables part of the airflow received by the windscreen 3 to smoothly escape in the width direction thereof.

Also, since the grommets 11 are formed of rubber dumper made of a rubber material having elasticity, it is possible to control noises due to the stay contacting the windshield through the rubber dumper, even in the case of a vehicle mounting comparatively highly vibratory V-type engine thereon.

Moreover, each stay 4 is constituted so as to support the windscreen 3 with the clearance A2 being formed between the upper surface of the handle cover 6 and the lower end of the windscreen 3. As a result, the airflow received by the front surface of the windscreen 3 during the travel of the vehicle 2 is allowed to escape through the clearance A2, thus enabling the windshield apparatus 1 to lessen the difference in pressure inside and outside the windscreen 3 with respect to the vehicle 2.

In addition, each stay 4 is formed with the rib 35 protruding toward a front along a substantially full length of the supporting portion 15, thus enabling the airflow received by the windscreen 3 to be pushed upwardly from the windscreen 3 along the rib 35. Further, the stay 4 is fixed such that the supporting portion 15 is inclined toward the outside as it extends upwards in a manner like a letter V. Thus, the windshield apparatus 1 allows more airflow that was received by the windscreen 3 to escape upwards from the vehicle 2, thereby enabling more airflow to pass over the head of a user, thus leading to the improvement of comfortableness during the drive.

Further, each stay 4 is formed so that the upper end of the supporting portion 15 may be located at a height less than or equal to half the height of the windscreen 3. Accordingly, whilst each stay 4 is arranged on the front side of the windscreen 3 in the windshield apparatus 1, the supporting portion 15 is made less likely to come into a user's view, thus giving the user a sense of liberation, improving comfortableness during the drive.

Furthermore, since a strong upward airflow can be obtained on the front of the windscreen 3, while the airflow toward the rear side of the windscreen 3 are being pushed upwards, it is possible to enhance the windshield effect to a user.

Also, the windscreen 3 allows the upper end thereof to be inclined rearwards, projecting from the shaft 25 toward a rear side of the vehicle 2, while allowing the lower end thereof to be arranged within a zone defined by the width T of the front forked portion. Thus, the center of gravity of the windscreen 3 can be brought close to the center of rotation (shaft 25) of the bar handle 7.

Moreover, since the windscreen 3 is arranged so that its upper end inclines rearwards, it is possible to allow the airflow received by the windscreen 3 to escape upward from the vehicle 2, enabling more airflow to pass over the head of a user, thus improving the comfortableness during the drive.

Moreover, each stay 4 is formed from a resin material. Accordingly, it does not need to be pipe-shaped as has conventionally been so, thereby enabling a cross-section thereof to be of a non-circular shape, i.e., a tabular shape, thus enhancing design properties. Further, each stay 4 is capable of absorbing a shock by employing such a configuration that it is easily deformable against a load applied from a predetermined direction.

Furthermore, the side mirrors 9 are held by the mirror attachment stays 18 provided separately from the stays 4. The mirror attachment stays 18 are constituted such that their engagement with the stays 4 can be released when an excessive load is applied to the stays 4.

Thus, even when any of the stays 4 subjected to an excessive load is deformed, the mirror attachment stay 18 can prevent the damage to the side mirror 9 by releasing the engagement therewith. Further, since the stays 4 are constituted such that they are easily deformable at the bent portions 4a, the load can be absorbed by the bending deformation of the bent portions 4a when the load is applied to the stays 4.

Moreover, the attaching portions 27 which fix the second end of the stay 4 are provided in pairs on the right and left sides in the vicinity of the joint portion of the shaft 25 of the bar handle 7, thus enabling the center of gravity of the windscreen 3 attached to the stays 4 to be brought close to the center of rotation of the bar handle 7.

The present invention is not limited to the foregoing embodiments, but various modifications are possible within the scope of the present invention. For example, although the stays are provided in pairs on the right and left sides in the foregoing embodiments, the right and left stays may be integrated with each other by providing a bridge member between the support members of the stays to thereby connect them.

A windshield apparatus (1) for a saddle-type vehicle (2) which can be attached thereto without narrowing a space on a rear side of a windscreen (3). The windshield apparatus (1) attached to a frontal portion of the saddle-type vehicle (2) comprises the windscreen (3) and stays (4) for supporting the windscreen (3). Each stay (4) is composed of a J-shaped member, comprising: a supporting portion (15) provided on a first side thereof, the supporting portion (15) supporting the windscreen (3) from a front side thereof; and a fixing portion (16) provided on a second side thereof that extends rearwards from the first side, the fixing portion (16) being fixed to the saddle-type vehicle (2).

## Claims

1. A windshield apparatus (1) for attachment to a frontal portion of a saddle-type vehicle (2) comprising:
a windscreen (3) and stays (4) provided in pairs in a width direction for supporting said windscreen (3),
wherein each of said stays (4) comprises:
a supporting portion (15) provided on a first side thereof, and
a fixing portion (16) provided on a second side thereof that extends downwards from said first side, said fixing portion (16) is adapted to be fixed to a bar handle (7) of said saddle-type vehicle (2),
said supporting portion (15) extending upwardly from the lower end of said windscreen (3) supporting said windscreen (3) from a front side of said windscreen (3) facing toward the front (F) of the vehicle when the windscreen (3) is attached to the frontal portion of the vehicle (2),
said supporting portion (15) being arranged between a center of said windscreen (3) and an outer edge thereof with respect to the width direction,
**characterized in that** said fixing portion (16) is adapted to be fixed below said bar handle (7).

2. The windshield apparatus (1) according to claim 1, **characterized in that**
an elastic member (11) is provided between said supporting portion (15) and said windscreen (3).

3. The windshield apparatus (1) according to claim 1 or 2, **characterized in that**
a clearance (A1) is formed between said supporting portion (15) and said windscreen (3).

4. The windshield apparatus (1) according to any one of claims 1 to 3, **characterized in that**
said fixing portion (16) is constituted of a member extending rearwardly from a lower end of said supporting portion (15).

5. The windshield apparatus (1) according to claim 1, **characterized in that**
the substantial center portion of said stay (4) between said supporting portion (15) and said fixing portion (16) is adapted to be fixed above said bar handle (7).

6. The windshield apparatus (1) according to claim 5, **characterized in that** said windshield apparatus (1) further comprises:
a mirror attachment stay (18) that fixes the substantial center of said stay (4) and is adapted to be attached above said bar handle (7) through a male screw (56) formed in a side mirror (9).

7. The windshield apparatus (1) according to claim 1, **characterized in that**
each of said stays (4) further comprises a rib (35) that is convex toward the front (F) in a plan view, and is formed along substantially the full length of the supporting portion (15).

8. The windshield apparatus (1) according to claim 7, **characterized in that**
said windscreen (3) has a curved shape that is convex toward the front (F) of the vehicle (2) in a plan view, and
that the surface of said windscreen (3) is formed so that the protruding length thereof toward the front (F) is shorter than that of said rib (35) in the substantial center thereof with respect to the height direction.

9. The windshield apparatus (1) according to claim 1, **characterized in that**
both outer edges of the windscreen (3) are adapted to be connected with the upper ends of knuckle guards (8) covering a front of both ends of said bar handles (7).

## Patentansprüche

1. Windschutzvorrichtung (1) zum Anbringen an einem vorderen Abschnitt eines Fahrzeugs (2) in Sattelbauart, welche aufweist:
eine Windschutzscheibe (3) und Streben (4), die in Paaren in Breitenrichtung zum Tragen der Windschutzscheibe (3) vorgesehen sind,
wobei jede der Streben (4) aufweist:
ein Trägerabschnitt (15), der an deren erster Seite vorgesehen ist, und
einen Befestigungsabschnitt (16), der an deren zweiter Seite vorgesehen ist und sich von der ersten Seite nach unten erstreckt, wobei der Befestigungsabschnitt (16) zur Befestigung an einer Lenkstange (7) des Fahrzeugs (2) in Sattelbauart ausgelegt ist,
wobei sich der Trägerabschnitt (15) vom unteren Ende der Windschutzscheibe (3) aufwärts erstreckt und die Windschutzscheibe (3) von einer Vorderseite der Windschutzscheibe (3) trägt, die zur Vorderseite (F) des Fahrzeugs weist, wenn die Windschutzscheibe (3) an dem vorderen Abschnitt des Fahrzeugs (2) angebracht ist,
wobei der Trägerabschnitt (15) zwischen einer Mitte der Windschutzscheibe (3) und deren Außenrand in Bezug auf die Breitenrichtung angeordnet ist,
**dadurch gekennzeichnet, dass** der Befestigungsabschnitt (16) zur Befestigung unter der Lenkstange (7) ausgelegt ist.

2. Die Windschutzvorrichtung (1) nach Anspruch 1, **dadurch gekennzeichnet, dass**
ein elastisches Element (11) zwischen dem Trägerabschnitt (15) und der Windschutzscheibe (3) vorgesehen ist.

3. Die Windschutzvorrichtung (1) nach Anspruch 1 oder 2, **dadurch gekennzeichnet, dass**
ein Zwischenraum (A1) zwischen dem Trägerabschnitt (15) und der Windschutzscheibe (3) ausgebildet ist.

4. Die Windschutzvorrichtung (1) nach einem der Ansprüche 1 bis 3, **dadurch gekennzeichnet, dass**
der Befestigungsabschnitt (16) aus einem Element aufgebaut ist, das sich von einem unteren Ende des Trägerabschnitts (15) nach hinten erstreckt.

5. Die Windschutzvorrichtung (1) nach Anspruch 1, **dadurch gekennzeichnet, dass**
ein angenäherter Mittelabschnitt der Strebe (4) zwischen dem Trägerabschnitt (15) und dem Befestigungsabschnitt (16) zur Befestigung über der Lenkstange (7) ausgebildet ist.

6. Die Windschutzvorrichtung (1) nach Anspruch 5, **dadurch gekennzeichnet, dass** die Windschutzvorrichtung (1) ferner aufweist:
eine Spiegelhalterungsstrebe (18), die die angenäherte Mitte der Strebe (4) fixiert und dazu ausgelegt ist, über die Lenkstange (7) durch ein im Seitenspiegel (9) ausgebildetes Außengewinde (56) angebracht zu werden.

7. Die Windschutzvorrichtung (1) nach Anspruch 1, **dadurch gekennzeichnet, dass** jede der Streben (4) einer eine Rippe (35) aufweist, die in Draufsicht zur Vorderseite (F) hin konvex ist, und entlang im Wesentlichen der vollen Länge des Trägerabschnitts (15) ausgebildet ist.

8. Die Windschutzvorrichtung (1) nach Anspruch 7, **dadurch gekennzeichnet, dass**
die Windschutzscheibe (3) eine gekrümmte Form hat, die in Draufsicht zur Vorderseite (F) des Fahrzeugs (2) hin konvex ist, und
dass die Oberfläche der Windschutzscheibe (3) so ausgebildet ist, dass, in ihrer angenäherten Mitte in Bezug auf die Höhenrichtung (F), ihre zur Vorderseite (F) vorstehende Länge kürzer ist als jene der Rippe (35).

9. Die Windschutzvorrichtung (1) nach Anspruch 1, **dadurch gekennzeichnet, dass** beide Außenränder der Windschutzscheibe (3) zur Verbindung mit Oberenden von Handschützern (8) ausgelegt sind, die beide Enden der Lenkstange (7) vorne abdecken.

## Revendications

1. Dispositif de pare-brise (1) destiné à être fixé sur une partie frontale d'un véhicule de type à selle (2) comprenant :
un pare-brise (3) et des supports (4) prévus en paires dans le sens de la largeur pour supporter ledit pare-brise (3),
dans lequel chacun desdits supports (4) comprend :
une partie de support (15) prévue sur son premier côté, et
une partie de fixation (16) prévue sur son second côté qui s'étend vers le bas à partir dudit premier côté, ladite partie de fixation (16) est adaptée pour être fixée à un guidon (7) dudit véhicule de type à selle (2),
ladite partie de support (15) s'étendant vers le haut à partir de l'extrémité inférieure dudit pare-brise (3) supportant ledit pare-brise (3) à partir d'un côté avant dudit pare-brise (3) orienté vers l'avant (F) du véhicule lorsque le pare-brise (3) est fixé sur la partie frontale du véhicule (2),
ladite partie de support (15) étant agencée entre un centre dudit pare-brise (3) et son bord externe par rapport au sens de la largeur,
**caractérisé en ce que** ladite partie de fixation (16) est adaptée pour être fixée au-dessous dudit guidon (7).

2. Dispositif de pare-brise (1) selon la revendication 1, **caractérisé en ce que**
un élément élastique (11) est prévu entre ladite partie de support (15) et ledit pare-brise (3).

3. Dispositif de pare-brise (1) selon la revendication 1 ou 2, **caractérisé en ce que**
un jeu (A1) est formé entre ladite partie de support (15) et ledit pare-brise (3).

4. Dispositif de pare-brise (1) selon l'une quelconque des revendications 1 à 3, **caractérisé en ce que**
ladite partie de fixation (16) est constituée par un élément s'étendant vers l'arrière à partir d'une extrémité inférieure de ladite partie de support (15).

5. Dispositif de pare-brise (1) selon la revendication 1, **caractérisé en ce que**
la partie sensiblement centrale dudit support (4) entre ladite partie de support (15) et ladite partie de fixation (16) est adaptée pour être fixée au-dessus dudit guidon (7).

6. Dispositif de pare-brise (1) selon la revendication 5, **caractérisé en ce que**
ledit dispositif de pare-brise (1) comprenant en outre :
un support de fixation de rétroviseur (18) qui fixe le centre sensible dudit support (4) et est adapté pour être fixé au-dessus dudit guidon (7) par le biais d'une vis mâle (56) formée dans un rétroviseur latéral (9).

7. Dispositif de pare-brise (1) selon la revendication 1, **caractérisé en ce que**
chacun desdits supports (4) comprend en outre une nervure (35) qui est convexe vers l'avant (F) sur une vue en plan, et est formée sensiblement le long de toute la longueur de la partie de support (15).

8. Dispositif de pare-brise (1) selon la revendication 7, **caractérisé en ce que**
ledit pare-brise (3) a une forme incurvée qui est convexe vers l'avant (F) du véhicule (2) sur une vue en plan, et
**en ce que** la surface dudit pare-brise (3) est formée de sorte que sa longueur en saillie vers l'avant (F) est plus courte que celle de ladite nervure (35) dans son centre sensible par rapport à la direction de hauteur.

9. Dispositif de pare-brise (1) selon la revendication 1, **caractérisé en ce que**
les deux bords externes du pare-brise (3) sont adaptés pour être raccordés avec les extrémités supérieures des protections de joint d'articulation (8) recouvrant une partie avant des deux extrémités dudit guidon (7).
